# EUROPEAN PATENT APPLICATION

(11) **EP 1 832 872 A1**
(43) Date of publication of application: **12.09.2007**
(21) Application number: 05814150.8
(22) Date of filing: 08.12.2005
(51) Int. Cl.: G01N 27/447, C12M 1/00, G01N 1/00, G01N 35/00, G01N 35/08, G01N 37/00

(54) **PLATE FOR BIOLOGICAL SAMPLE ANALYSIS**

(30) Priority: 08.12.2004 JP 2004355142
(71) Applicant: MATSUSHITA ELECTRIC INDUSTRIAL CO., LTD., Osaka 571-8501 (JP)
(72) Inventor: MORI, Kazuyoshi, (JP); SHIMIZU, Ryuji, (JP); YAMASHITA, Motohiro, (JP); NANJO, Toshifumi, (JP)
(74) Representative: Jackson, Martin Peter
(86) International application number: PCT/JP2005/022525
(87) International publication number: WO 2006/062149

(57) **Abstract**

There is provided a biological sample analysis plate on which, when a biological sample is transferred by rotating the plate, the biological sample can be easily transferred from an outer circumference side to an inner circumference side with respect to a center of rotation.

A chamber part (16) which is provided on the inner circumference side with respect to the center of rotation and a sample holding part (20) which is provided on the outer circumference side are connected by channels (17) and (18), and the sample holding part (20) previously contains air inside, and the air in the sample holding part (20) is compressed and held in the sample holding part (20) when the biological sample moves from the chamber (16) toward the sample holding part (20) due to a centrifugal force that is caused by rotation of the plate.

## Description

### TECHNICAL FIELD

The present invention relates to a biological sample analysis plate which makes a biological sample such as DNA, protein, or the like migrate in a buffer agent, and detects a transport reaction of the biological sample to discriminate the biological sample.

### BACKGROUND ART

When considering general biological samples, DNA and protein exist broadly. In recent years, with a rapid progress of molecular biology, involvement of genome in various diseases has been understood with a fair degree of precision, and medical cares targeted at genome have attracted attention. With respect to DNA, SNPs (Single Nucleotide Polymorphisms: a general term for a difference of a single code (a single nucleotide) in genome) attract attention presently. The reason is as follows. By classification of SNPs, the prevalence rates of many diseases, and the effects or sensitivities of individuals to medical agents can be predicated, and furthermore, perfect identification of individuals can be performed because plural human beings having completely the same SNPs never exist on the planet even among parents and children or brothers.

As a method for examining SNPs, "sequencing" (determination of base sequence) for directly reading a base sequence of DNA from an end is adopted most commonly. As a method for performing the sequencing, although several methods have been reported, "dideoxy sequencing" (Sanger method) is performed most commonly. The sequencing is, in any method including the Sanger method, established on the basis of a technique for separating/ discriminating a difference in single-base lengths by modified polyacrylamide gel electrophoresis having high separative efficiency, or capillary electrophoresis.

As another method, there is an affinity ligand capillary electrophoresis method.

The affinity ligand capillary electrophoresis uses intermolecular affinity, particularly, specific affinity in ecosystem (such as enzyme-substrate affinity or antigen-antibody affinity) to give specificity to separation. To be specific, analysis is performed focusing attention on a phenomenon as follows. That is, when an affinity ligand that specifically recognizes a base sequence is applied to an electrophoresis solution filled in a capillary tube and a sample is migrated in the solution by electrophoresis, only molecular species that mutually react in the sample mixture have variations in the migration speeds (for example, refer to Japanese Published Patent Application No. Hei.7-311198 (Patent Document 1)).

On the other hand, proteins exist in cells, tissues, and bio-fluids, and are involved in control of organic activities, supply of energies to cells, combination of important substances, maintenance of organic structures, and further, intercellular communication, and intracellular signal transmission. Recently, it is becoming obvious that proteins have multiple functions according to various environments, existences of other proteins for mutual reaction, degrees and kinds of modifications given to proteins.

A protein is produced by connecting twenty kinds of amino acids sequentially according to a genetic instruction (sequence information), and it is said that there are tens of millions of proteins. If the genetic sequence is found, it is possible to obtain information as to what amino acids are connected in what order. A set of proteins produced by biotic genomes is called "proteome". Now that decoding of base sequences of human genomes has been completed, analysis of proteome is increasingly promoted.

With respect to the analysis and study for the functions of proteins, it is necessary to perform not only identification and characterization but also biochemical assay, study for protein-protein interaction, elucidation for protein network or signaling in and out of cells, and the like. Various fields of technologies are adopted for the study of the protein functions. For example, enzyme assay, yeast two-hybrid assay, purification by chromatography, information tool and data base, and the like are adopted, and particularly, discrimination of proteins by electrophoresis is an important scheme. There are various reports with respect to fluid transportation and orientation for the case where a transport reaction that is obtained when a fluid in a capillary tube, such as a sample, an analyte, a buffer agent, or a reagent, is transferred by such as electrophoresis is detected to perform analysis, discrimination, or determination of the sample (for example, refer to Japanese Published Patent Application No.2000-513813 (Patent Document 2), Japanese Published Patent Application No.2001-523341 (Patent Document 3), Japanese Published Patent Application No.2000-514928 (Patent Document 4), and Japanese Published Patent Application No.2003-28883 (Patent Document 5)).

### DISCLOSURE OF THE INVENTION

### PROBLEMS TO BE SOLVED BY THE INVENTION

As described above, the method using a capillary electrophoresis apparatus has been widely used for analysis of biological samples. A glass tube having an outer diameter of about 300*µ* and an inner diameter of about 100*µ* is often used as a capillary which is a part for actually performing a transport reaction, and its surface is coated with polyimide or the like to make the tube infrangible.

However, in order to detect the internal sample, a portion of the coating is removed by burning or melting with a chemical to produce a detection window. At this time, since the portion where the coating is removed becomes frangible, careful handling is required. If the tube is broken, it is more dangerous.

Further, injection of the sample is generally performed by pressurization or aspiration, and it is necessary to inject a predetermined amount of sample. Although the injection is controlled by time, the injection amount undesirably varies from experiment to experiment because of variations in the viscosity of the buffer agent in the capillary or variations in temperature. Since the sample amount significantly affects the measurement result, it is a very important item.

Furthermore, in the case of adopting the apparatus using such capillary, it is structurally difficult to perform electrophoresis in short channels, and therefore, measurement should be carried out with excessive electrophoresis distance and time.

Furthermore, also in the case of using channels on a plate, in the methods described in Patent Documents 5 and 6, when performing separation of a sample, plural capillary channels are crossed, and at least three electrodes are provided, and a voltage is applied to two of the three electrodes to make the sample migrate through the crossing portions. In this method, however, since the channels are crossed, there is a possibility that the sample does not migrate satisfactorily during electrophoresis, and thereby an accurate measurement result cannot be obtained.

Further, in the methods described in Patent Documents 3 and 4, minute channels are embedded in a platform, and the rotation speed of the platform is varied to vary a centripetal force that is caused by the rotation, thereby making the sample migrate. In this method, however, there is a problem that the shapes of the minute channels are considerably complicated in addition to a problem that the sample cannot be migrated in other directions than the centripetal direction.

The present invention is made to solve the above-described problems and has for its object to provide an easy-to-handle, compact, lightweight, and inexpensive biological sample analysis plate which can provide an accurate detection result in a short time, when detecting a transport reaction that is obtained by making a biological sample migrate in a buffer agent filled in channels.

### MEASURES TO SOLVE THE PROBLEMS

In order to solve the above-mentioned problems, according to the present invention, there is provided a biological sample analysis plate in which microchannels are formed, having a construction for optically or electrochemically analyzing a biological sample that flows in the microchannels, wherein a first chamber that is provided on an inner circumference side with respect to a rotation center of the biological sample analysis plate and a second chamber that is provided on an outer circumference side thereof are connected by a first microchannel so as to permit the biological sample to move between the first chamber and the second chamber through the first microchannel; and the second chamber previously contains air inside, and when the biological sample moves from the first chamber toward the second chamber due to a centrifugal force that is caused by rotation of the biological sample analysis plate, the air in the second chamber is compressed and held in the second chamber.

Further, in the biological sample analysis plate according to the present invention, an opening of the second chamber communicating to the first chamber is formed on a portion of an outer wall of the second chamber, which portion is on the outer circumference side of the analysis plate.

Further, in the biological sample analysis plate according to the present invention, a second microchannel is further connected to the first microchannel that is connected to the second chamber, and the biological sample held in the second chamber is movable through the first microchannel and the second microchannel.

Further, in the biological sample analysis plate according to the present invention, a third chamber is connected to the second microchannel, the third chamber is disposed in a position closer to the rotation center of the biological sample analysis plate than the first chamber, and the biological sample is movable from the second chamber to the third chamber through the second microchannel.

Further, in the biological sample analysis plate according to the present invention, a buffer agent supply channel which has a portion connected to a sample supply channel that is formed by the first microchannel and the second microchannel, and forms a sample quantity determination and holding part at the connected portion, has an arc portion with the gravity of the biological sample analysis plate being the center of the arc.

Further, in the biological sample analysis plate according to the present invention, the second channel has an arc portion with the gravity of the biological sample analysis plate being the center of the arc.

Further, the biological sample analysis plate according to the present invention is for antigen-antibody reaction analysis.

Further, the biological sample analysis plate according to the present invention is for blood component analysis.

Further, the biological sample analysis plate according to the present invention is for gene analysis.

### EFFECTS OF THE INVENTION

According to the present invention, by rotating the biological sample analysis plate, the biological sample that is held in the holding means provided on the outer circumference side of the plate can be transferred to the quantity determination and holding part by utilizing a centrifugal force.

Further, according to the present invention, in the biological sample discrimination utilizing the centrifugal force, the second channel is shaped in an arc with the gravity of the biological sample analysis plate being the center of the arc, and therefore, approximately the entirety of the second channel for electrophoresis of the biological sample can be scanned.

Thereby, the reaction situation in the middle of the second channel or at the end of the second channel can be detected, and an extremely accurate observation result can be obtained by observing the process of the reaction.

### BRIEF DESCRIPTION OF THE DRAWINGS

Figure 1 is a diagram illustrating a pattern formation surface of a biological sample analysis plate according to a first embodiment of the present invention.
Figure 2 is a diagram illustrating a pattern that is formed on the biological sample analysis plate according to the first embodiment of the present invention.
Figure 3 is a cross-sectional view of a sample injection part or a buffer agent injection part in the biological sample analysis plate according to the first embodiment of the present invention.
Figure 4 is a cross-sectional view illustrating a chamber part, or a sample holding part, or a buffer part in the biological sample analysis plate according to the first embodiment of the present invention.
Figure 5 is a cross-sectional view illustrating a positive electrode part or a negative electrode part in the biological sample analysis plate according to the first embodiment of the present invention.
Figure 6(a) is a diagram illustrating the state of a DNA conjugate when the biological sample analysis plate pattern according to the first embodiment is filled with a sample.
Figure 6(b) is an enlarged view of a sample quantity determination part, illustrating the state of the DNA conjugate when the biological sample analysis plate pattern according to the first embodiment is filled with the sample.
Figure 7 is a diagram illustrating the states of the respective samples when the biological sample analysis plate according to the first embodiment which is filled with the DNA conjugate and the DNA sample is rotated at 4000rpm.
Figure 8 is a diagram illustrating the states of the respective samples when the biological sample analysis plate according to the first embodiment which is filled with the DNA conjugate and the DNA sample is rotated at 4000rpm and then suddenly stopped.
Figure 9 is a diagram illustrating the states of the respective samples when the biological sample analysis plate according to the first embodiment which is filled with the DNA conjugate and the DNA sample is rotated at 4000rpm, suddenly stopped, and again rotated.
Figure 10 is a diagram illustrating a part for performing DNA scanning, of the biological sample analysis plate pattern according to the first embodiment of the present invention.
Figure 11 is a diagram illustrating the state where the sample quantity determination part formed in the biological sample analysis plate according to the first embodiment is filled with the DNA sample, and the DNA sample migrates in the DNA conjugate for separation that is filled in the first channel.

### DESCRIPTION OF REFERENCE NUMERALS

- 100: biological sample analysis plate
- 200: pattern
- 3: hole for fixing a rotation part
- 4: positioning hole
- 5: plate gravity
- 6: buffer agent inlet
- 7: buffer agent injection part
- 8: sample inlet
- 9: sample injection part
- 10: first channel
- 11: second channel
- 12: positive electrode part
- 13: negative electrode part
- 14: third channel
- 15: channel
- 16: chamber part (first chamber)
- 17: channel
- 18: channel (first microchannel)
- 19: channel (second microchannel)
- 20: sample holding part (second chamber)
- 20a: opening
- 21: buffer part (third chamber)
- 22, 50: channel
- 23: sample quantity determination part
- 24: groove
- 25: channel
- 26: channel
- 27: film
- 28: channel
- 29: channel
- 30: electrode part
- 31: DNA conjugate
- 32: DNA sample
- 34: air
- 35: portion
- 36: portion
- 37: film
- 40: arc portion
- 80: sample supply channel
- 90: buffer agent supply channel
- A: electrophoresis direction

### BEST MODE TO EXECUTE THE INVENTION

### (Embodiment 1)

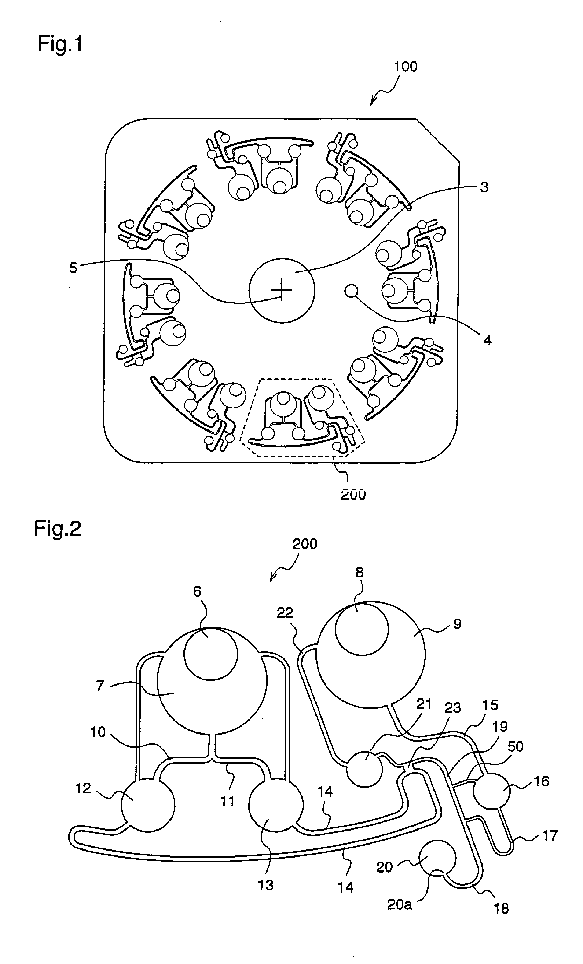

Hereinafter, a biological sample analysis plate according to a first embodiment of the present invention will be described with reference to figures 1~14.

In the present invention, a biological sample is migrated in a buffer agent to promote biological, enzymatical, immunological, and chemical reactions, thereby to discriminate the biological sample easily, inexpensively, and accurately in a short time.

In this first embodiment, in order to specify the description, it is assumed that the biological sample is a DNA sample, and the buffer agent includes a DNA conjugate for separation and a DNA bonding control agent. The biological sample analysis plate adds a predetermined quantity of the DNA sample into the DNA conjugate for separation which is filled in a channel to make the sample perform electrophoresis in the conjugate, and detects fluorescence or absorbance in the channel to determine presence/absence of SNPs (Single Nucleotide Polymorphisms) in the DNA sample.

Initially, the construction of the biological sample analysis plate 100 according to the first embodiment will be described with reference to figures 1~5. Figure 1 is a diagram illustrating the biological sample analysis plate 100 viewed from a channel formation surface, according to the first embodiment.

Figure 2 is a diagram illustrating a specific shape of a channel pattern 200 formed on the biological sample analysis plate 100 of the first embodiment shown in figure 1. The channel pattern comprises fine channels that are formed by grooves having minute width and depth, which channels are to be used for discrimination of a biological sample. In this first embodiment, the depth of the channels of the channel pattern 200 is 50 microns.

On the biological sample analysis plate 100 according to the first embodiment, eight channel patterns identical to the pattern 200 shown in figure 2 are radially formed, whereby DNA discriminations for eight analytes can be performed simultaneously.

As shown in figure 1, the outer shape of the biological sample analysis plate 100 according to the first embodiment is an 8cm square, three corners out of four corners thereof are rounded, and remaining one corner is chamfered.

Further, a hole 4 is formed to make the outer shape of the plate 100 asymmetrical so that the positions of the patterns can be specified. As a material of the plate 100, an acrylic plastic is adopted, and its thickness is 2mm. Further, grooves are formed on the channel formation surface, and an acrylic film having a thickness of 50 *µ*m is adhered onto the surface, thereby producing hermetically closed channels. Furthermore, a hole 3 for fixing the biological sample analysis plate 100 onto a rotation unit is produced around a gravity center 5 of the plate 100.

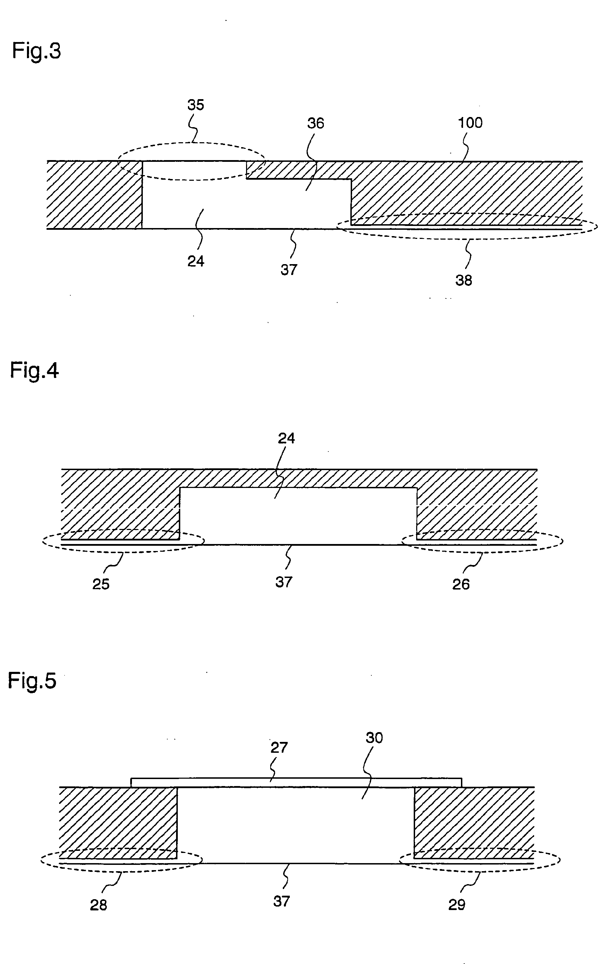

As shown in figure 2, a DNA conjugate as a buffer agent is injected from a buffer agent inlet 6, and the injected buffer agent is temporarily stored in a buffer agent injection part 7. A DNA sample injected from a sample inlet 8 is temporarily stored in a sample injection part 9. The buffer agent injection part 7 and the sample injection part 9 are similar in shape, and a peripheral cross section thereof is shown in figure 3.

Figure 3 is a diagram illustrating a cross section of the buffer agent injection part 7 or the sample injection part 9 and its vicinity, wherein diagonally hatched portions correspond to the biological sample analysis plate 100. In figure 3, a portion 35 corresponds to the buffer agent inlet 6 and the sample inlet 8, and a portion 36 corresponds to the buffer agent injection part 7 and the sample injection part 9. A film 37 is the above-mentioned acrylic film, and a closed channel is formed by adhering the film 37 so as to cover the groove 24. The channel formation surface is on the lower side.

A positive electrode part 12 is an insertion part for a positive electrode, and a negative electrode part 13 is an insertion part of a negative electrode. These electrode parts 12 and 13 are connected through a channel 14, and further connected to the buffer agent insertion part 7 through a channel 10 and a channel 11. A chamber part 16 is connected to the sample injection part 9 through a channel 15.

Further, a sample holding part 20 is connected to the chamber part 16 through a channel 17 and a channel 18, and the channel 17 is narrow while the channel 18 is wider than the channel 17. In this first embodiment, the width of the channel 17 is 100µm while the width of the channel 18 is 200µm.

A buffer part 21 is connected to the chamber part 16 and to the sample holding part 20 through the channels 17, 18, and 19, and further, air releasing from the chamber part 16 is realized by a channel 50 while air releasing from the buffer part 21 is realized by a channel 22.

A sample quantity determination part 23 is provided at a junction between the channel 14 and the channel 19, and determines a quantity of the DNA sample.

The chamber part 16, the sample holding part 20, and the buffer part 21 are identical in shape, and a cross-sectional view of each part and its vicinity is shown in figure 4. In figure 4, the channel formation surface is on the lower side.

A groove 24 corresponds to the chamber part 16, the sample holding part 20, or the buffer part 21, and it has a vassal shape having a depth of 1.5mm. A channel 25 and a channel 26 extend from each part.

Next, the positive electrode part 12 and the negative electrode part 13 will be described with reference to figure 5.

Figure 5 is a cross-sectional view illustrating the positive electrode part 12 or the negative electrode part 13 and its vicinity. The channel formation surface is on the lower side.

An electrode part 30 corresponds to the positive electrode part 12 or the negative electrode part 13, and it is a hole penetrating through the biological sample analysis plate 100. A film 37 and a film 27 are attached to the both surfaces, and the film 37 is required to be made of a non-conductive material while the film 27 may be made of a conductive material. When the film 27 is conductive, voltage can be applied to the sample inside the electrode part 30 by applying voltage to the film 27 from the outside. When the film 27 is non-conductive, a needle-shaped electrode is inserted through the film 27 into the electrode part 30, whereby voltage application is realized.

Further, the film 37 is attached to the entire surface of the biological sample analysis plate 100 while the film 27 is attached to only a portion in the vicinity of the electrode part 30.

Hereinafter, a description will be given of examples of specific control and operation to be performed until presence/absence of SNPs (Single Nucleotide Polymorphisms) in the DNA sample is determined, with reference to figure 2.

Initially, a DNA sample as an analyte is prepared.

Essentially, DNA has a duplex-strand helical structure. In this first embodiment, however, single-strand DNA having a base length of about 60 bases including SNP sites to be discriminated is prepared.

Since extraction and denaturation for the single-strand DND are not directly related to the present invention, specific description thereof will be omitted.

Next, a DNA conjugate is prepared as a buffer agent.

A DNA conjugate is obtained by covalently bonding a high-molecular linear polymer to a 5' end of single-strand DNA having a base length of 6~12 bases. Further, the DNA conjugate has a sequence that is complemental to normal DNA but non-complemental to mutant DNA, and the bonding force to the normal DNA is strong while the bonding force to the mutant DNA is weak. Further, when performing electrophoresis, the electrophoresis speed is considerably reduced because the linear polymer bonded to the 5' end acts as a weight. It is assumed that the "DNA conjugate" described hereinafter is a material containing a pH buffer agent that also serves as an electrolyte, and a DNA bonding force control agent such as MgCl₂.

When preparation of the samples is completed, the DNA conjugate and the DNA sample are injected into the plate 100. A predetermined amount of the DNA conjugate is dispensed from the buffer agent inlet 6 into the buffer agent injection part 7 using a pipeter or the like. Likewise, a predetermined amount of the DNA sample is dispensed from the sample inlet 8 into the sample injection part 9.

Although the dispensing amount depends on the scale of the pattern, it is assumed that, in this first embodiment, the amount of the DNA conjugate is 18 microliters and the amount of the DNA sample is 2 microliters.

Next, the biological sample analysis plate 100 is fixed to a motor or the like, and rotated around the gravity center 5. At this time, the dispensed DNA conjugate and DNA sample migrate toward the outer circumference due to a centrifugal force.

The DNA conjugate in the buffer agent injection part 7 passes through the channel 10 and the channel 11, and is equally separated to the positive electrode part 12 and the negative electrode part 13. The DNA conjugate that migrates into the positive electrode part 12 further passes through the channel 14 to reach the sample quantity determination part 23. Likewise, the DNA conjugate that migrates into the negative electrode part 13 also passes through the channel 14 to reach the sample quantity determination part 23.

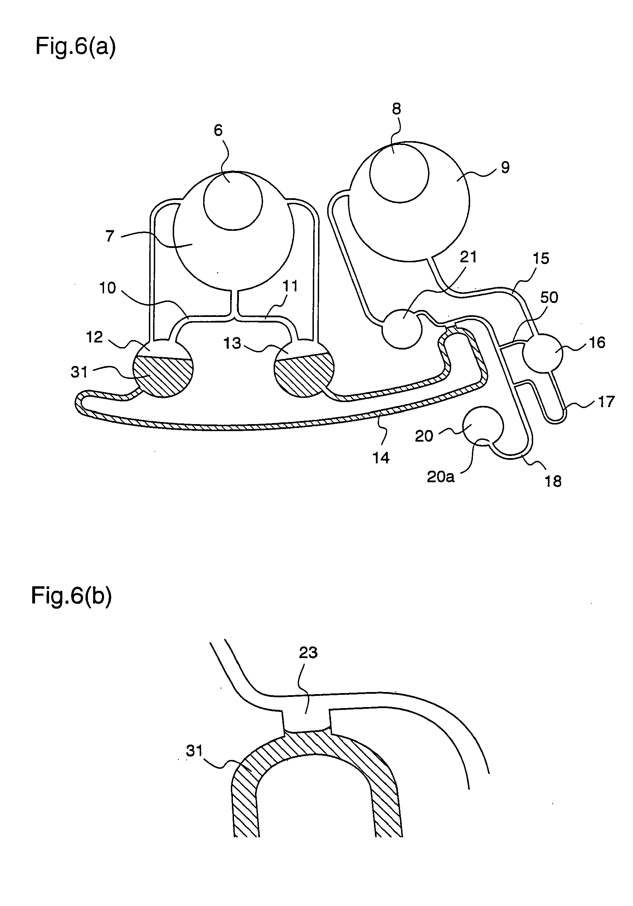

Figure 6(a) shows the state where the migration of the DNA conjugate is stopped two minutes after the start of rotation. Further, figure 6(b) is an enlarged value of the sample quantity determination part 23 and its vicinity.

The DNA conjugate 31 is filled up to about 70% of the positive electrode part 12 and the negative electrode part 13, and further, it is filled in the channel 14 to reach the sample quantity determination part 23 as shown in figure 6(b).

The fluid surface level of the DNA conjugate existing in the positive electrode part 12 and the negative electrode part 13 and the fluid surface level of the DNA conjugate existing in the sample quantity determination part 23 are on the same circumference with the gravity center 5 as its center.

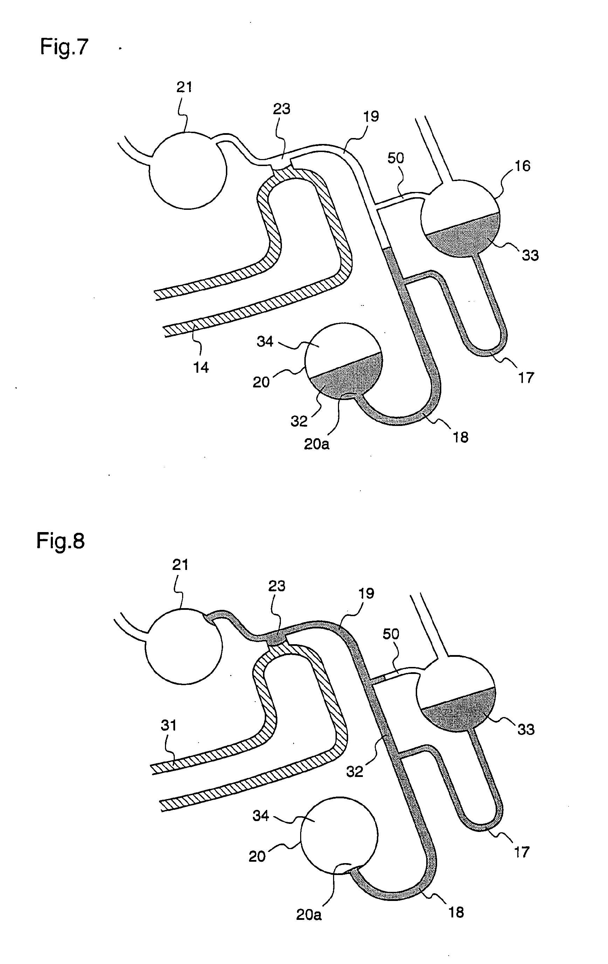

Next, migration of the injected DNA sample will be described with reference to figures 2 and 7.

The DNA sample in the sample injection part 9 passes through the channel 15 to reach the chamber part 16, and further, it passes through the channels 17 and 18 to reach the sample holding part 20 that is positioned on the outer circumference side. At this time, the air in the chamber part 16 is released through the channels 50 and 19. However, as shown in figure 7, the channel 18 is connected to the outer circumference side of the sample holding part 20, and the sample holding part 20 has no hole for air releasing. Therefore, the air remaining in the sample holding part 20 is not released but compressed.

Figure 7 shows the states of the DNA sample 32 and the DNA sample 33 two minutes after the start of rotation. Air 34 is compressed, and the state where the centrifugal force and the pressurization force are balanced is maintained only during rotation. In this first embodiment, the rotation speed is 4000rpm.

Next, the subsequent operation will be described.

The biological sample analysis plate 100 is rotated for a predetermined period of time, and the rotation is suddenly stopped under the state where the migrations of the DNA conjugate and the DNA sample are stopped. For example, the rotation at 4000rpm is stopped within two seconds.

The DNA sample 32 existing in the sample holding part 20 loses the centrifugal force, and starts to flow back into the channel 18 from the sample holding part 20 due to the pressure of the air 34.

Further, the DNA sample 32 migrates to the channel 17 and the channel 19 until the air 34 in the sample holding part 20 becomes equal to the atmosphere pressure. At this time, since the channel 17 is narrower than the channel 19, more DNA sample 32 is apt to flow into the channel 19 than into the channel 17.

Figure 8 shows the state immediately after the sudden stop.

The DNA sample 32 in the sample holding part 20 passes through the channels 18 and 19 to reach the sample quantity determination part 23 and the buffer part 21 due to expansion of the air 34.

Especially in the sample quantity determination part 23, the DNA sample 32 contacts the filled DNA conjugate 31. At this time, there exists a certain quantity of the DNA sample 32 which passes through the channel 17 to reach the chamber part 16.

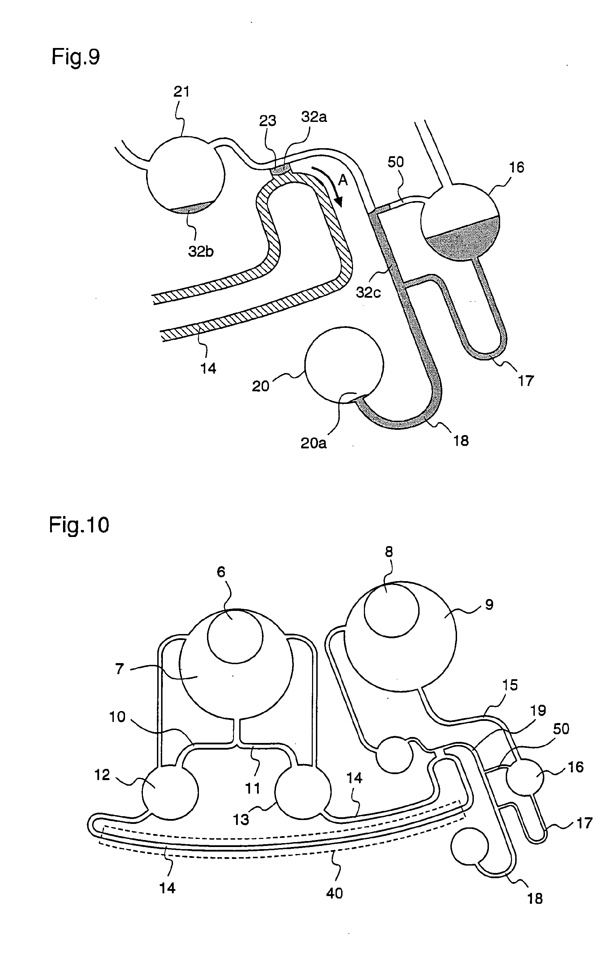

Next, the biological sample analysis plate 100 is again rotated at a medium speed for a few seconds. At this time, it is important to perform deceleration smoothly. Figure 9 shows the state after the rotation is stopped.

While the DNA sample 32 filled in the channel 19 flows to the chamber part 16, a slight quantity of the DNA sample 32 remains in the sample quantity determination part 23. The remaining DNA sample 32a is electrically isolated from the other DNA samples 32a and 32c.

The reason why the second rotation is performed at a speed different from that of the first rotation is as follows. That is, when the rotation speed of the second rotation is reduced and the deceleration speed thereof is smoothed, the air 74 in the sample holding part 60 is prevented from being strongly compressed. Accordingly, the channel 19 is prevented from being filled again with the DNA sample in the sample holding part 20 which flows back to the channel 19.

The sample DNA 32 that remains in the sample quantity determination part 23 after the above-mentioned operation is used as a final sample to be subjected to discrimination of SNPs.

Next, electrophoresis is carried out as follows. A positive electrode and a negative electrode are inserted in the positive electrode part 12 and the negative electrode part 13, respectively, and a voltage of several hundreds volts is applied. Then, electrical fields occur in the channel 14 and in the sample quantity determination part 23, whereby a predetermined amount of the DNA sample 32 that remains in the sample quantity determination part 23 migrates in the channel 14 toward the positive electrode side (direction A in figure 9).

The channel 14 is filled with the DNA conjugate, and the DNA sample 32 performs electrophoresis while repeating bonding with the DNA conjugate. At this time, as described above, the electrophoresis speed of the normal DNA in the DNA sample 32 is reduced because the bonding force of the normal DNA with the DNA conjugate is strong, while the electrophoresis speed of the mutant DNA is increased relative to the normal DNA because the bonding force of the mutant DNA with the DNA conjugate is weak. That is, when both the normal DNA and the mutant DNA exist in the DNA sample, the normal DNA and the mutant DNA are separated from each other, thereby performing discrimination of SNPs.

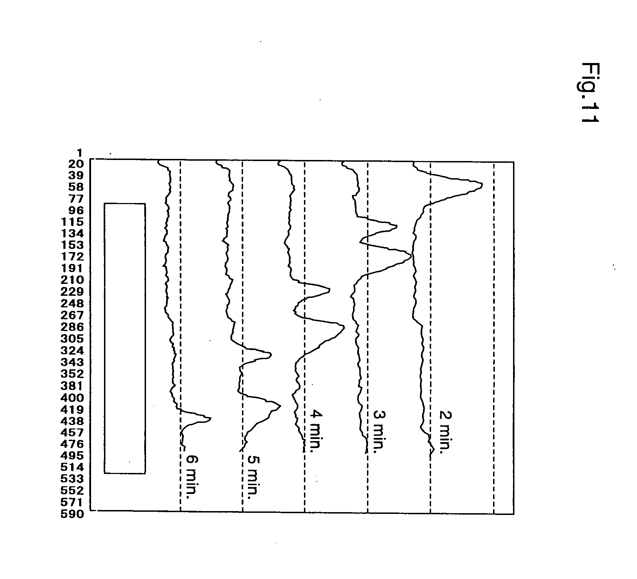

Figure 11 is a graph obtained by scanning the DNA 32 while the DNA sample performs electrophoresis in an arc portion 40 of the channel 14 shown in figure 10.

Detection of DNA is carried out by exciting the fluorescent-label (FITC) modified DNA with light of 470nm, and performing detection of light in the vicinity of 520nm. This DNA detection may be carried out by detecting absorption of light at 260nm.

In figure 11, the abscissa indicates the position of the arc portion 40, and the DNA migrates from left to right. That is, the sample quantity determination part 23 is on the left side, and the positive electrode part 12 is on the right side. The ordinate indicates the fluorescence intensity, showing the waveform that varies with time for every one minute. It is found that two peaks are gradually separated from each other. In this case, it is determined that the same quantities of the normal DNA and the mutant DNA exist in the DNA sample 32.

In the graph, the right-side peak shows the mutant DNA because the electrophoresis speed thereof is high, while the left-side peak shows the normal DNA because the electrophoresis speed thereof is low.

As described above, according to the biological sample analysis plate 100 of the first embodiment, in the biological sample analysis plate 100 for discriminating a biological sample by detecting a transport reaction that is obtained when the biological sample is migrated in a buffer agent, the sample quantity determination part 23 for holding a predetermined volume of the biological sample is provided at the junction between the second channel 90 in which the buffer agent flows and the first channel 80 in which the biological sample flows, and the biological sample is supplied to the sample quantity determination part 23, and further, the sample holding part 20 having the opening 20a on the outer circumference side of the biological sample analysis plate 100 is provided contacting the channel 18 for supplying the biological sample to the sample quantity determination part 23. Thereby, a predetermined amount of the DNA sample 32 can be held in the sample quantity determination part 23 on the biological sample analysis plate 100 by only the rotating operation of the plate 100, and the DNA sample 32 can be made to perform electrophoresis by the positive electrode part 12, the negative electrode part 13, and the channel 14. Furthermore, since a portion of the channel 14 for electrophoresis which is the second channel 90 where the buffer agent flows is shaped in an arc, an extremely accurate detection result can be obtained when the DNA sample which is a specific DNA taken out of cells or blood is measured on the biological sample analysis plate.

### APPLICABILITY IN INDUSTRY

A biological sample analysis plate according to the present invention is very useful for performing discrimination of a biological sample such as a DNA sample inexpensively and easily.

## Claims

1. A biological sample analysis plate in which microchannels are formed, having a construction for optically or electrochemically analyzing a biological sample that flows in the microchannels, wherein
a first chamber that is provided on an inner circumference side with respect to a rotation center of the biological sample analysis plate and a second chamber that is provided on an outer circumference side thereof are connected by a first microchannel so as to permit the biological sample to move between the first chamber and the second chamber through the first microchannel, and
the second chamber previously contains air inside, and when the biological sample moves from the first chamber toward the second chamber due to a centrifugal force that is caused by rotation of the biological sample analysis plate, the air in the second chamber is compressed and held in the second chamber.

2. A biological sample analysis plate as defined in Claim 1 wherein an opening of the second chamber communicating to the first chamber is formed on a portion of an outer wall of the second chamber, which portion is on the outer circumference side of the analysis plate.

3. A biological sample analysis plate as defined in Claim 1 wherein
a second microchannel is further connected to the first microchannel that is connected to the second chamber, and
the biological sample held in the second chamber is movable through the first microchannel and the second microchannel.

4. A biological sample analysis plate as defined in Claim 2 wherein
a second microchannel is further connected to the first microchannel that is connected to the second chamber, and
the biological sample held in the second chamber is movable through the first microchannel and the second microchannel.

5. A biological sample analysis plate as defined in Claim 4 wherein
a third chamber is connected to the second microchannel,
said third chamber is disposed in a position closer to the rotation center of the biological sample analysis plate than the first chamber, and
the biological sample is movable from the second chamber to the third chamber through the second microchannel.

6. A biological sample analysis plate as defined in any of Claims 3 to 5 wherein a buffer agent supply channel which has a portion connected to a sample supply channel that comprises the first microchannel and the second microchannel, and forms a sample quantity determination and holding part at the connected portion, has an arc portion with the gravity of the biological sample analysis plate being a center of the arc.

7. A biological sample analysis plate as defined in any of Claims 1 to 6, said biological sample analysis plate being for antigen-antibody reaction analysis.

8. A biological sample analysis plate as defined in any of Claims 1 to 6, said biological sample analysis plate being for blood component analysis.

9. A biological sample analysis plate as defined in any of Claims 1 to 6, said biological sample analysis plate being for gene analysis.
